# EUROPÄISCHE PATENTSCHRIFT

(11) **EP 2 508 773 B1**
(45) Veröffentlichungstag und Bekanntmachung des Hinweises auf die Patenterteilung: **09.10.2013**
(21) Anmeldenummer: 12158876.8
(22) Anmeldetag: 09.03.2012
(51) Int. Cl.: F16F 9/02, F16F 9/46, F15B 15/26

(54) **Blockierbares Kolben-Zylinderaggregat**
Blockable piston cylinder device
Agrégat blocable de cylindre à piston

(30) Priorität: 04.04.2011 DE 102011015959
(43) Veröffentlichungstag der Anmeldung: 10.10.2012
(73) Patentinhaber: Stabilus GmbH, 56070 Koblenz (DE)
(72) Erfinder: Foris, Tibor, 520060 Sf. Gheorghe (RO); Gaina, Elena-Mihaela, 500148 Brasov (RO); Gödri, Ioan-Alexandru, 507015 Bod (RO); Müller, Thomas, 56244 Leuterod (DE); Vidrean, Mihai Augustin, 545400 Sighisoara (RO)
(74) Vertreter: Klein, Thomas

(56) Entgegenhaltungen:
- DE-A1- 3 602 441
- DE-A1- 10 353 903
- DE-B3-102004 047 449
- US-A- 3 799 036

## Beschreibung

Die Erfindung bezieht sich auf ein blockierbares Kolben-Zylinderaggregat mit einem an beiden Enden verschlossenen, mit einem unter Druck stehenden Medium gefüllten Zylinder mit einer Mittellängsachse, in dem ein gegenüber der Innenwand des Zylinders abgedichteter Kolben verschiebbar geführt ist, der den Zylinder in einen ersten Arbeitsraum und einen zweiten Arbeitsraum unterteilt, mit einer an dem Kolben koaxial zur Mittellängsachse angeordneten rohrartigen Kolbenstange, die durch den zweiten Arbeitsraum und eine das eine Ende des Zylinders verschließende Dichtungs- und Führungseinheit aus dem Zylinder herausgeführt ist, mit einer in der Kolbenstange verschiebbar angeordneten Betätigungsstange, deren eines Ende an dem aus dem Zylinder herausragenden Ende der Kolbenstange herausragt und durch deren anderes Ende ein Ventilschieber eines in dem Kolben angeordneten Blockierventils axial verschiebbar beaufschlagbar ist, durch das erster Arbeitsraum und zweiter Arbeitsraum über eine Verbindung miteinander verbindbar sind, wobei der Ventilschieber einen von einer Kammer umschlossen Bereich mit reduziertem Durchmesser zwischen zwei Bereichen größeren Durchmessers aufweist, die Kammer über eine Verbindungsöffnung mit dem zweiten Arbeitsraum verbunden ist und der eine Bereich größeren Durchmessers des Ventilschiebers mit radialem Spiel durch eine Ventilöffnung in den ersten Arbeitsraum ragt.

Derartige Kolben-Zylinderaggregate sind beispielsweise aus der deutschen Patentschrift DE 10 2004 047 449 B3 bekannt und finden beispielsweise in Bürostühlen und dort bevorzugt für die Rückenlehnenverstellung ihre Anwendung. Hierbei besteht Bedarf an Kolben-Zylinderaggregaten, die beispielsweise ein Wippen der Rückenlehne zulassen. Dazu muss das Blockierventil in eine dauerhafte Offenstellung bringbar sein.

Die DE 103 53 903 A1 liefert hierzu einen Lösungsansatz. In der Kolbenstange ist eine Rasteinrichtung nach Art einer Kugelschreiberrastung vorgesehen, die es ermöglicht, das Blockierventil dauerhaft in seiner Offenstellung zu halten. Nachteilig dabei ist, dass die Kolbenstange einem weiteren Arbeitsgang unterzogen werden muss, damit die zusätzlichen Teile untergebracht werden können. Zudem sind die Standzeiten dieser Bauteile aufgrund ihrer geringen Größe und der verhältnismäßig großen Beanspruchung nicht optimal.

Aufgabe der Erfindung ist es ein blockierbares Kolben-Zylinderaggregat der eingangs genannten Art zu schaffen, das bei verbesserter Standfestigkeit günstiger herzustellen ist.

Diese Aufgabe wird erfindungsgemäß dadurch gelöst, dass der Kolben eine Aufnahmekammer aufweist, in der eine mit Nocken versehene Nockenhülse und ein einen sägezahnähnlichen Vorsprung aufweisenden Umschaltring angeordnet sind, und dass der Ventilschieber mit seinem der Betätigungsstange entgegengesetzten freien Ende in die Aufnahmekammer hineinragt, wobei an dem freien Ende des Ventilschiebers wenigstens ein Nocken ausgebildet ist, der zum blockieren oder Freigeben des Kolbens mit den Nocken der Nockenhülse und einem Vorsprung einer in der Aufnahmekammer angeordneten zusammenwirkt.

Durch diese Ausbildung kann auf eine komplizierte Bearbeitung der Kolbenstange verzichtet und auf eine bereits in Serie hergestellte Kolbenstange zurückgegriffen werden. Gleichzeitig können die entsprechenden Bauteile größer und somit genauer hergestellt werden.

In weiterer erfindungsgemäßer Ausgestaltung ist die Kammer über eine koaxiale Verbindungsöffnung, eine Ringkammer und einer Aufnahmekammer mit dem zweiten

Arbeitsraum und über eine radiale Verbindungsöffnung mit dem ersten Arbeitsraum verbunden.

Erfindungsgemäß ist für eine einfache Montage am Übergang von Ringkammer zur Aufnahmekammer eine weitere Ringschulter ausgebildet, an der die in der Aufnahmekammer angeordnete Nockenhülse anliegt und ferner ist an der der zweiten Arbeitskammer zugewandten Seite der Nockenhülse ein Umschaltring angeordnet.

Für eine besonders sichere Funktion weist der Umschaltring an seiner der zweiten Arbeitskammer abgewandten Seite einen sich in axialer Richtung erstreckenden, sägezahnähnlichen Vorsprung auf, der zusätzlich radial nach Innen hervorragt.

Erfindungsgemäß sind Nockenhülse und Umschaltring relativ zueinander verdrehsicher angeordnet, wobei an der der zweiten Arbeitskammer zugewandten Seite in der Nockenhülse wenigstens eine sich radial nach Innen in Richtung Mittellängsachse erstreckende Erhebung vorgesehen ist, die in an dem Umschaltring ausgebildete Ausnehmungen ragt.

In vorteilhafter Ausgestaltung bilden eine in der Nockenhülse an der dem Umschaltring zugewandten Seite ausgebildete Stufe und eine Anlagefläche an der der Nockenhülse zugewandten Stirnseite des Umschaltrings eine Sicherung gegen ein axiales Verschieben des Umschaltrings tiefer in die Aufnahmekammer hinein.

In einer alternativen erfindungsgemäßen Ausführungsform ist an dem in die Aufnahmekammer ragenden freien Ende des Ventilschiebers ein Nockenring angeordnet, an dessen radial umlaufender Mantelfläche wenigstens ein, vorzugsweise eine Mehrzahl von im Wesentlichen dreieckförmigen Nocken ausgebildet sind.

Erfindungsgemäß befindet sich der wenigstens eine dreieckförmige Nocken in dem von zwei sich in radialer Richtung nach innen ragenden Nocken gebildeten Freiraum der Nockenhülse, wobei die Anzahl der Nocken und die der Freiräume gleich ist.

Erfindungsgemäß sind Nockenhülse und Umschaltring relativ zum Ventilschieber verdrehbar angeordnet.

Ausführungsbeispiele der Erfindung sind in der Zeichnung dargestellt und werden im Folgenden näher beschrieben. Es zeigen
- Figur 1: einen Querschnitt einer erfindungsgemäßen blockierbaren Kolben-Zylindereinheit
- Figur 2: einen Ausschnitt im Kolbenbereich der Kolben-Zylindereinheit nach Figur 1 im Schnitt bei nicht betätigter Betätigungsstange und geschlossenem Blockierventil
- Figur 3: einen Ausschnitt im Kolbenbereich der Kolben-Zylindereinheit nach Figur 1 im Schnitt bei betätigter Betätigungsstange und geöffnetem Blockierventil
- Figur 4: einen Ausschnitt im Kolbenbereich der Kolben-Zylindereinheit nach Figur 1 im Schnitt bei nicht betätigter Betätigungsstange und geöffnetem Blockierventil
- Figur 5: den erfindungsgemäßen Ventilschieber des Kolben-Zylinderaggregat nach Figur 1
- Figur 6: eine mit dem Ventilschieber zusammenwirkende Nockenhülse
- Figur 7: ein mit dem Ventilschieber zusammenwirkender Umschaltring

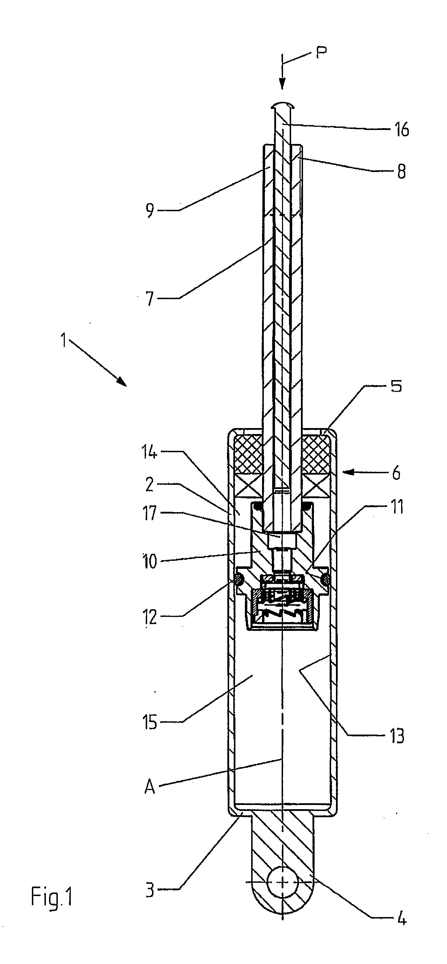

Die Figur 1 zeigt den Längsschnitt durch ein blockierbares Kolben-Zylinderaggregat 1 mit einem Zylinder 2 mit einer Längsachse A, der ein erstes gasdicht verschlossenes Ende 3 aufweist, an dem ein Anschlusselement 4 angeordnet ist. An dem dem ersten Anschlusselement 4 gegenüberliegenden zweiten Ende 5 des Zylinders 2 ist in dem Zylinder 2 eine Dichtungs- und Führungseinrichtung 6 angeordnet, durch die konzentrisch zur Mittellängsachse A eine Kolbenstange 7 abgedichtet und axial bewegbar nach außen geführt wird, wobei an dem nach außen ragenden Ende der Kolbenstange 7 eine Anschlussvorrichtung 8 in Form eines Außengewindes 9 ausgebildet ist. Mittels des Anschlusselements 4 und der Anschlussvorrichtung 8 kann das Kolben-Zylinderaggregat 1 einerseits an ein nicht gezeigtes feststehendes Bauteil, beispielsweise an einen Sitzträger eines Bürostuhls, und andererseits an ein relativ zum feststehenden Bauteil schwenkbares Schwenkteil, z.B. eine hier ebenfalls nicht dargestellte Rückenlehne eines Bürostuhls, angeschlagen werden.

An dem der Anschlussvorrichtung 8 gegenüberliegenden Ende der Kolbenstange 7 ist ein Kolben 10 angeordnet, der an seiner radial umlaufenden Mantelfläche eine Ringnut 11 besitzt, in der ein Dichtungsring 12 angeordnet ist. Der Dichtungsring 12 liegt mit seiner äußeren radial umlaufenden Mantelfläche an der Innenwand 13 des Zylinders 2 dicht an, so dass der Innenraum des Zylinders 2 durch den Kolben 10 in einen kolbenstangenseitigen ersten Arbeitsraum 14 und einen kolbenstangenfernen zweiten Arbeitsraum 15 unterteilt ist.

Die Kolbenstange 7 ist rohrartig ausgebildet. Durch die Kolbenstange 7 ist eine Betätigungsstange 16 hindurchgeführt, die mit ihrem einen Ende an dem äußeren Ende der Kolbenstange 7 herausragt und mit ihrem anderen Ende im Bereich des Kolbens 10 an einem koaxial mit der Betätigungsstange angeordneten Ventilschieber 17 in Anlage ist. Die Betätigungsstange 16 kann in Richtung des Pfeils P weiter in die Kolbenstange 7 hinein bewegt werden.

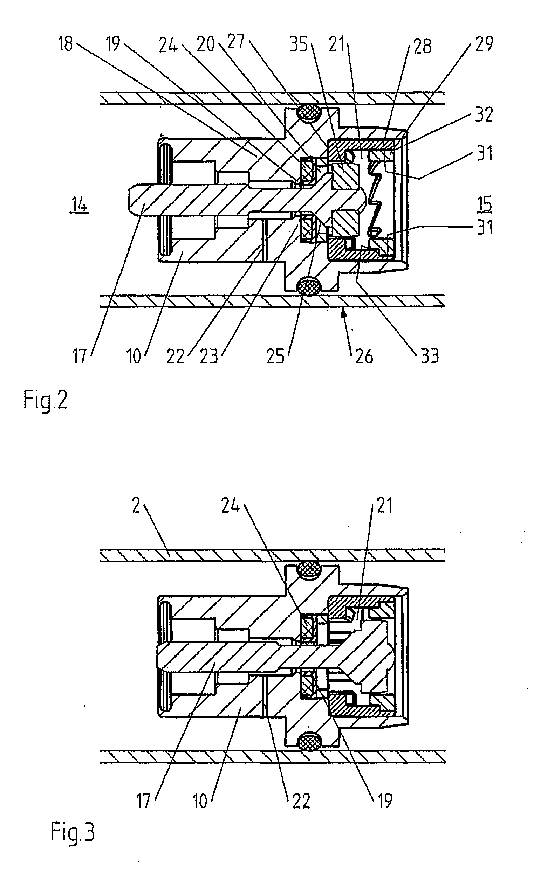

Wie in Figur 2 detaillierter zu sehen ist, ist der Ventilschieber 17 abgedichtet in einer Kammer 18 im Kolben 10 geführt, die über eine koaxiale Verbindungsöffnung 19 über eine Ringkammer 20 und eine Aufnahmekammer 21 mit dem zweiten Arbeitsraum 15 und über eine radiale Verbindungsöffnung 22 mit dem ersten Arbeitsraum 14 verbunden ist.

Im Bereich der Verbindungsöffnung 19 ist die Ringkammer 20 mit einer Ringschulter 23 ausgebildet, an der ein Dichtring 24 angeordnet ist, der mit seiner radial umlaufenden äußeren Mantelfläche dicht an der zylindrischen Wand der Ringkammer 20 und mit einer an die innere Mantelfläche angrenzenden Fläche oder Kante dicht an einem konischen Bereich 25 des Ventilschiebers 17 in Anlage ist. Ventilschieber 17 und Dichtring 24 bilden somit ein Blockierventil 26.

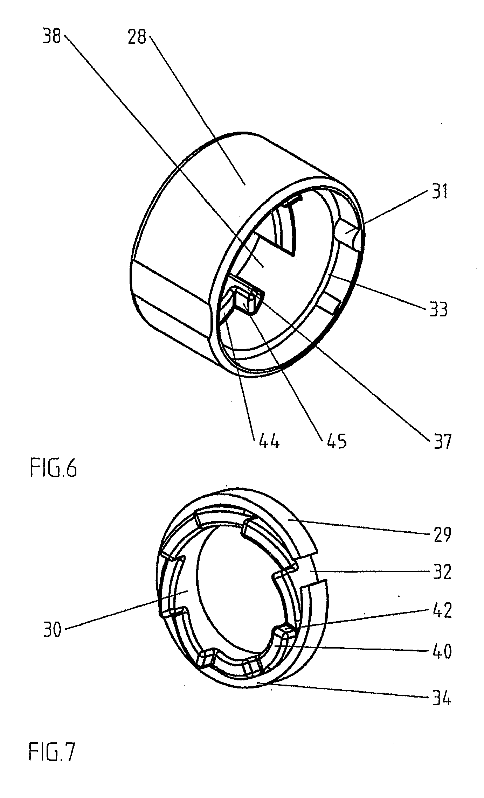

Am Übergang von Ringkammer 20 zur Aufnahmekammer 21 ist eine weitere Ringschulter 27 ausgebildet, an der eine in der Aufnahmekammer 21 angeordnete Nockenhülse 28 anliegt. An der der zweiten Arbeitskammer 15 zugewandten Seite der Nockenhülse 28 ist ein Umschaltring 29 angeordnet, der an seiner der zweiten Arbeitskammer 15 abgewandten Seite einen sich in axialer Richtung erstreckenden, sägezahnähnlichen Vorsprung 30 aufweist, der zusätzlich radial nach Innen hervorragt. Nockenhülse 28 und Umschaltring 29 sind relativ zueinander verdrehsicher angeordnet. Dazu ist an der der zweiten Arbeitskammer 15 zugewandten Seite in der Nockenhülse 28 wenigstens eine sich radial nach Innen in Richtung Mittellängsachse A erstreckende, in der Figur 6 besser zu sehende Erhebung 31 vorgesehen, die in wenigstens eine an dem Umschaltring 29 ausgebildete, in Figur 7 besser zu sehende Ausnehmung 32 ragt. Eine in der Nockenhülse 28 an der dem Umschaltring 29 zugewandten Seite ausgebildete Stufe 33 und eine ebenfalls in der Figur 7 ersichtliche Anlagefläche 34 an der der Nockenhülse 28 zugewandten Stirnseite des Umschaltrings 29 bilden eine Sicherung gegen ein axiales Verschieben des Umschaltrings 29 tiefer in die Aufnahmekammer 21 hinein.

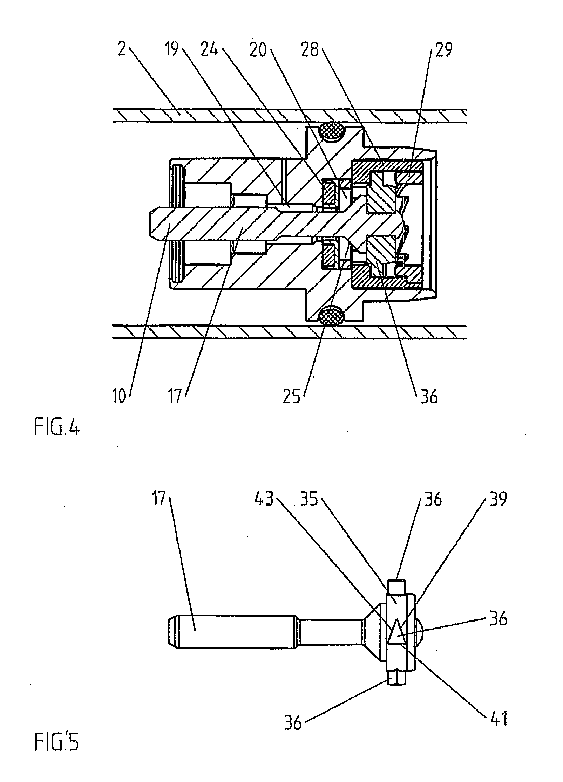

An dem in die Aufnahmekammer 21 ragenden freien Ende des Ventilschiebers 17 ist ein Nockenring 35 angeordnet, an dessen radial umlaufender Mantelfläche wenigstens ein, vorzugsweise eine Mehrzahl von im Wesentlichen dreieckförmigen Nocken 36, wie in Figur 5 gezeigt, ausgebildet sind. Alternativ können Nockenring und Ventilschieber einstückig ausgebildet sein, wie in Figur 3 gezeigt.

Die Figur 2 zeigt den Ventilschieber 17 bei nicht betätigter Betätigungsstange 16 und geschlossenem Blockierventil 26. Der bzw. die im Wesentlichen dreieckförmigen Nocken 36 befinden sich dabei in dem in der Figur 6 gezeigten, von zwei sich in radialer Richtung nach innen ragenden Nocken 37 gebildeten Freiraum 38 der Nockenhülse 28, wobei die Anzahl der Nocken 37 und die der Freiräume 38 gleich ist. Der konisch ausgebildete Bereich 25 des Ventilschiebers 17 liegt dabei die Verbindungsöffnung 19 abdichtend an dem Dichtring 24 an. Das Blockierventil 26 ist geschlossen.

Bei Betätigung der Betätigungsstange 16 in Richtung des Pfeils P wird der konische Bereich 25 des Ventilschiebers 17 von dem Dichtring 24 abgehoben, wie in der Figur 3 gezeigt. Dadurch können Kolben 10 und Kolbenstange 7 willkürlich in axialer Richtung entlang der Mittellängsachse A bewegt werden. Gleichzeitig kommt eine erste Nockenfläche 39 der wenigstens eine bzw. der Mehrzahl am Ventilschieber 17 angeordneten Nocken 36 in Anlage an eine am besten in der Figur 7 ersichtlichen Rampenfläche 40 des Umschaltrings 29, wobei, bei bevorzugter einstückiger Ausführung von Nockenring und Ventilschieber, der Ventilschieber 17 relativ zur Nockenhülse 28 und zum Umschaltring 29 solange in eine Drehbewegung versetzt wird, bis der wenigstens eine oder die Mehrzahl von Nocken 36 des Ventilschiebers 17 mit einer Anschlagfläche 41 an einer Anschlagfläche 42 des am Umschaltring 28 ausgebildeten Vorsprungs 30 in Anlage kommen.

Sind Ventilschieber 17 und Nockenring 35 mehrteilig aufgebaut, kann vorgesehen sein, dass nur der Nockenring 35 alleine oder zusammen mit dem Ventilschieber 17 in eine Drehbewegung versetzt wird.

Es ist jedoch auch vorstellbar, dass der Umschaltring 29 zusammen mit der Nockenhülse 28 in eine Drehbewegung versetzt wird, bis der wenigstens eine oder die Mehrzahl von Nocken 36 des Ventilschiebers 17 an der Anschlagfläche 42 des am Umschaltring 29 ausgebildeten Vorsprungs 30 in Anlage kommen.

Der bzw. die Nocken 36 am Ventilschieber 17 und die Nocken 37 der Nockenhülse 28 sind nun derart zueinander ausgerichtet, dass bei Entlastung der Betätigungsstange 16, wobei der Ventilschieber 17 durch die im Zylinder 2 herrschenden Druckverhältnisse entgegen der Pfeilrichtung des Pfeils P gedrängt wird, der wenigstens eine bzw. die Mehrzahl von Nocken 36 mit einer zweiten Nockenfläche 43 in Anlage an eine Rampenfläche 44 der Nocken 37 in der Nockenhülse 28 kommt. Nockenhülse 28 und Ventilschieber 17 können dabei noch solange relativ zueinander gedreht werden, bis die Anschlagfläche 41 des wenigstens einen Nockens 36 an eine an den Nocken 37 der Nockenhülse 28 ausgebildeten Anschlagfläche 45 in Anlage kommt, wie in der Figur 4 zu sehen ist. Der konisch ausgebildete Bereich 25 des Ventilschiebers 17 kann dabei nicht mehr an den Dichtring 24 in Anlage gebracht werden. Die Verbindungsöffnung 19 bleibt also geöffnet. Kolben 10 und Kolbenstange 7 können willkürlich in axialer Richtung entlang der Mittellängsachse A bewegt werden.

Zum Schließen der Verbindungsöffnung 19 muss die Betätigungsstange 16 wieder in Richtung des Pfeils P mit einer Kraft beaufschlagt werden, wobei die erste Nockenfläche 39 der wenigstens eine bzw. der Mehrzahl am Ventilschieber 17 angeordneten Nocken 36 wieder in Anlage an die Rampenfläche 40 des Umschaltrings 29 gebracht wird. Dadurch werden Ventilschieber 17 und Nockenhülse 28 erneut relativ gegeneinander verdreht. Dabei werden der oder die Nocken 36 des Ventilschiebers 17 und die Nocken 37 der Nockenhülse 28 derart zueinander ausgerichtet, dass bei Entlastung der Betätigungsstange 16, wobei wiederum der Ventilschieber 17 durch die im Zylinder 2 herrschenden Druckverhältnisse entgegen der Pfeilrichtung des Pfeils P gedrängt wird, der oder die Nocken 36 des Ventilschiebers 17 in den Freiraum 38 bewegt werden. Wie wieder in Figur 2 gezeigt, liegt der konisch ausgebildete Bereich 25 des Ventilschiebers 17 die Verbindungsöffnung 19 abdichtend an dem Dichtring 24 an, wodurch das Blockierventil 26 geschlossen ist. Kolben 10 und Kolbenstange 7 können nicht mehr relativ zum Zylinder 2 bewegt werden.

### Bezugszeichenliste

- 1: Kolben-Zylinderaggregat
- 2: Zylinder
- 3: erstes Ende
- 4: Anschlusselement
- 5: zweites Ende
- 6: Führungs- und Dichteinheit
- 7: Kolbenstange
- 8: Anschlussvorrichtung
- 9: Außengewinde
- 10: Kolben
- 11: Ringnut
- 12: Dichtungsring
- 13: Innenwand
- 14: erster Arbeitsraum
- 15: zweiter Arbeitsraum
- 16: Betätigungsstange
- 17: Ventilschieber
- 18: Kammer
- 19: Verbindungsöffnung
- 20: Ringkammer
- 21: Aufnahmekammer
- 22: Verbindungsöffnung
- 23: Ringschulter
- 24: Dichtring
- 25: konischer Bereich
- 26: Ventil
- 27: Ringschulter
- 28: Nockenhülse
- 29: Umschaltring
- 30: Vorsprung

- 31: Erhebung
- 32: Ausnehmung
- 33: Stufe
- 34: Anlagefläche
- 35: Nockenring
- 36: Nocken
- 37: Nocken
- 38: Freiraum
- 39: erste Nockenfläche
- 40: Rampenfläche
- 41: Anschlagfläche
- 42: Anschlagfläche
- 43: zweite Nockenfläche
- 44: Rampenfläche
- 45: Anschlagfläche

- A: Mittellängsachse
- P: Pfeil

## Patentansprüche

1. Blockierbares Kolben-Zylinderaggregat mit einem an beiden Enden verschlossenen, mit einem unter Druck stehenden Medium gefüllten Zylinder mit einer Mittellängsachse, in dem ein gegenüber der Innenwand des Zylinders abgedichteter Kolben verschiebbar geführt ist, der den Zylinder in einen ersten Arbeitsraum und einen zweiten Arbeitsraum unterteilt, mit einer an dem Kolben koaxial zur Mittellängsachse angeordneten rohrartigen Kolbenstange, die durch den zweiten Arbeitsraum und eine das eine Ende des Zylinders verschließende Dichtungs- und Führungseinheit aus dem Zylinder herausgeführt ist, mit einer in der Kolbenstange verschiebbar angeordneten Betätigungsstange, deren eines Ende an dem aus dem Zylinder herausragenden Ende der Kolbenstange herausragt und durch deren anderes Ende ein Ventilschieber eines in dem Kolben angeordneten Blockierventils axial verschiebbar beaufschlagbar ist, durch das erster Arbeitsraum und zweiter Arbeitsraum über eine Verbindung miteinander verbindbar sind, wobei der Ventilschieber einen von einer Kammer umschlossen Bereich mit reduziertem Durchmesser zwischen zwei Bereichen größeren Durchmessers aufweist, die Kammer über eine Verbindungsöffnung mit dem zweiten Arbeitsraum verbunden ist und der eine Bereich größeren Durchmessers des Ventilschiebers mit radialem Spiel durch eine Ventilöffnung ragt, **dadurch gekennzeichnet, dass** der Kolben (10) eine Aufnahmekammer (21) aufweist, in der eine mit Nocken (37) versehene Nockenhülse (28) und ein einen sägezahnähnlichen Vorsprung (30) aufweisenden Umschaltring (29) angeordnet sind, und dass der Ventilschieber (17) mit seinem der Betätigungsstange (16) entgegengesetzten freien Ende in die Aufnahmekammer (21) hineinragt, wobei an dem freien Ende des Ventilschiebers (17) wenigstens ein Nocken (36) ausgebildet ist, der zum blockieren oder Freigeben des Kolbens (10) mit den Nocken (37) der Nockenhülse (28) und einem Vorsprung 30 eines in der Aufnahmekammer (21) angeordneten Umschaltrings (29) zusammenwirkt.

2. Kolben-Zylindereinheit nach Anspruch 1, **dadurch gekennzeichnet, dass** die Kammer (18) über eine koaxiale Verbindungsöffnung (19), eine Ringkammer (20) und einer Aufnahmekammer (21) mit dem zweiten Arbeitsraum (15) und über eine radiale Verbindungsöffnung (22) mit dem ersten Arbeitsraum (14) verbunden ist.

3. Kolben-Zylindereinheit nach Anspruch 1 oder 2, **dadurch gekennzeichnet, dass** am Übergang von Ringkammer (20) zur Aufnahmekammer (21) eine weitere Ringschulter (27) ausgebildet ist, an der die in der Aufnahmekammer (21) angeordnete Nockenhülse (28) anliegt und dass an der der zweiten Arbeitskammer (15) zugewandten Seite der Nockenhülse (28) ein Umschaltring (29) angeordnet ist.

4. Kolben-Zylindereinheit nach einem der vorgehenden Ansprüche, **dadurch gekennzeichnet, dass** der Umschaltring (29) an seiner der zweiten Arbeitskammer (15) abgewandten Seite einen sich in axialer Richtung erstreckenden, sägezahnähnlichen Vorsprung (30) aufweist, der zusätzlich radial nach Innen hervorragt.

5. Kolben-Zylindereinheit nach einem der vorhergehenden Ansprüche, **dadurch gekennzeichnet, dass** Nockenhülse (28) und Umschaltring (29) relativ zueinander verdrehslcher angeordnet sind, wobei an der der zweiten Arbeitskammer (15) zugewandten Seite in der Nockenhülse (28) wenigstens eine sich radial nach Innen in Richtung Mittellängsachse (A) erstreckende Erhebung (31) vorgesehen ist, die in an dem Umschaltring (29) ausgebildete Ausnehmungen (32) ragt.

6. Kolben-Zylindereinheit nach einem der vorhergehenden Ansprüche, **dadurch gekennzeichnet, dass** eine in der Nockenhülse (28) an der dem Umschaltring (29) zugewandten Seite ausgebildete Stufe (33) und eine Anlagefläche (34) an der der Nockenhülse (28) zugewandten Stirnseite des Umschaltrings (29) eine Sicherung gegen ein axiales Verschieben des Umschaltrings (29) tiefer in die Aufnahmekammer (21) bilden.

7. Kolben-Zylindereinheit nach einem der vorhergehenden Ansprüche, **dadurch gekennzeichnet, dass** an dem in die Aufnahmekammer (21) ragenden freien Ende des Ventilschiebers (17) ein Nockenring (35) angeordnet ist, an dessen radial umlaufender Mantelfläche wenigstens ein, vorzugsweise eine Mehrzahl von im Wesentlichen dreieckförmigen Nocken (36) ausgebildet sind.

8. Kolben-Zylindereinheit nach einem der vorhergehenden Ansprüche, **dadurch gekennzeichnet, dass** sich der wenigstens eine dreieckförmige Nocken (36) in dem von zwei sich in radialer Richtung nach innen ragenden Nocken (37) gebildeten Freiraum (38) der Nockenhülse (28) befindet, wobei die Anzahl der Nocken (37) und die der Freiräume (38) gleich ist.

9. Kolben-Zylindereinheit nach einem der vorhergehenden Ansprüche, **dadurch gekennzeichnet, dass** Nockenhülse (28) und Umschaltring (29) relativ zum Ventilschieber (17) verdrehbar angeordnet sind.

## Claims

1. Blockable piston-cylinder assembly having a cylinder which is closed at both ends and which is filled with a pressurized medium and which has a central longitudinal axis in which a piston which is sealed off with respect to the inner wall of the cylinder is guided in a displaceable manner, which piston divides the cylinder into a first working chamber and a second working chamber, having a tubular piston rod which is arranged on the piston coaxially with respect to the central longitudinal axis and which is led out of the cylinder through the second working chamber and through a sealing and guiding unit that closes off one end of the cylinder, having an actuation rod that is arranged in a displaceable manner in the piston rod, one end of which actuation rod projects out of that end of the piston rod which projects out of the cylinder, and by means of the other end of which actuation rod a valve slide of a blocking valve arranged in the piston can be acted on in an axially displaceable manner, by means of which blocking valve the first working chamber and the second working chamber can be connected to one another via a connection, wherein the valve slide has a region of reduced diameter, surrounded by a chamber, between two regions of relatively large diameter, the chamber is connected via a connecting opening to the second working chamber, and one region of relatively large diameter of the valve slide projects with radial play through a valve opening, **characterized in that** the piston (10) has a receiving chamber (21) in which there are arranged a cam sleeve (28), which is provided with cams (37), and a switching ring (29) which has a sawtooth-like projection (30), and **in that** the valve slide (17), by way of its free end situated opposite the actuation rod (16), projects into the receiving chamber (21), wherein, on the free end of the valve slide (17), there is formed at least one cam (36) which, in order to block or release the piston (10), interacts with the cams (37) of the cam sleeve (28) and with a projection (30) of a switching ring (29) arranged in the receiving chamber (21).

2. Piston-cylinder unit according to Claim 1, **characterized in that** the chamber (18) is connected to the second working chamber (15) via a coaxial connecting opening (19), an annular chamber (20) and a receiving chamber (21), and is connected to the first working chamber (14) via a radial connecting opening (22).

3. Piston-cylinder unit according to Claim 1 or 2, **characterized in that**, at the transition from the annular chamber (20) to the receiving chamber (21), there is formed a further annular shoulder (27) against which the cam sleeve (28) arranged in the receiving chamber (21) bears, and **in that** a switching ring (29) is arranged on that side of the cam sleeve (28) which faces towards the second working chamber (15).

4. Piston-cylinder unit according to one of the preceding claims, **characterized in that** the switching ring (29) has, on its side facing away from the second working chamber (15), a sawtooth-like projection (30) which extends in an axial direction and which additionally projects radially inwards.

5. Piston-cylinder unit according to one of the preceding claims, **characterized in that** the cam sleeve (28) and switching ring (29) are arranged so as to be rotationally conjoint with respect to one another, wherein in the cam sleeve (28), on the side facing towards the second working chamber (15), there is provided at least one elevation (31) which extends radially inwards in the direction of the central longitudinal axis (A) and which projects into recesses (32) formed on the switching ring (29).

6. Piston-cylinder unit according to one of the preceding claims, **characterized in that** a securing means for preventing an axial displacement of the switching ring (29) deeper into the receiving chamber (21) is formed by a step (33), which is formed in the cam sleeve (28) on the side facing towards the switching ring (29), and by an abutment surface (34) on that end side of the switching ring (29) which faces towards the cam sleeve (28).

7. Piston-cylinder unit according to one of the preceding claims, **characterized in that** a cam ring (35) is arranged on the free end, which projects into the receiving chamber (21), of the valve slide (17), on the radially encircling shell surface of which cam ring there is formed at least one, preferably a multiplicity of substantially triangular cams (36).

8. Piston-cylinder unit according to one of the preceding claims, **characterized in that** the at least one triangular cam (36) is situated in the free space (38), formed by two cams (37) projecting in the radially inward direction, of the cam sleeve (28), wherein the number of cams (37) and the number of free spaces (38) is equal.

9. Piston-cylinder unit according to one of the preceding claims, **characterized in that** the cam sleeve (28) and switching ring (29) are arranged so as to be rotatable relative to the valve slide (17).

## Revendications

1. Groupe piston-cylindre blocable comprenant un cylindre, fermé aux deux extrémités, rempli d'un fluide sous pression et ayant un axe longitudinal central, dans lequel est guidé en coulissement un piston rendu étanche par rapport à la paroi intérieure du cylindre, lequel divise le cylindre en une première chambre de travail et une deuxième chambre de travail, comprenant une tige de piston de type tubulaire montée sur le piston de manière coaxiale par rapport à l'axe longitudinal central, laquelle sort du cylindre à travers la deuxième chambre de travail et une unité d'étanchéité et de guidage qui ferme l'une des extrémités du cylindre, comprenant une tige d'actionnement disposée de manière à pouvoir coulisser dans la tige de piston, dont l'une des extrémités fait saillie au niveau de l'extrémité de la tige de piston qui fait saillie hors du cylindre et par l'autre extrémité de laquelle peut être sollicité en coulissement axial un curseur de vanne d'une vanne de blocage disposée dans le piston, par le biais de laquelle la première chambre de travail et la deuxième chambre de travail peuvent être reliées entre eux par une liaison, le curseur de vanne présentant une zone de diamètre réduit entourée par une chambre entre deux zones de diamètre plus grand, la chambre étant reliée avec la deuxième chambre de travail par le biais d'une ouverture de liaison et l'une des zones de diamètre plus grand du curseur de vanne faisant saillie avec un jeu radial à travers une ouverture de vanne, **caractérisé en ce que** le piston (10) présente une chambre d'accueil (21) dans laquelle sont disposées une douille à cames (28) munie de cames (37) et une bague d'inversion (29) qui présente une partie en saillie (30) similaire à des dents de scie, et **en ce que** le curseur de vanne (17) fait saillie dans la chambre d'accueil (21) avec son extrémité libre à l'opposé de la tige d'actionnement (16), au moins une came (36) étant configurée à l'extrémité libre du curseur de vanne (17), laquelle interagit avec les cames (37) de la douille à cames (28) et avec une partie en saillie (30) d'une bague d'inversion (29) disposée dans la chambre d'accueil (21) pour bloquer ou libérer le piston (10).

2. Groupe piston-cylindre selon la revendication 1, **caractérisé en ce que** la chambre (18) est reliée avec la deuxième chambre de travail (15) par le biais d'une ouverture de liaison coaxiale (19), une chambre annulaire (20) et une chambre d'accueil (21) et avec la première chambre de travail (14) par le biais d'une ouverture de liaison radiale (22).

3. Groupe piston-cylindre selon la revendication 1 ou 2, **caractérisé en ce qu'**un épaulement annulaire (27) supplémentaire est formé au niveau de la transition de la chambre annulaire (20) vers la chambre d'accueil (21), sur lequel repose la douille à cames (28) disposée dans la chambre d'accueil (21), et **en ce qu'**une bague d'inversion (29) est disposée sur le côté de la douille à cames (28) qui fait face à la deuxième chambre de travail (15).

4. Groupe piston-cylindre selon l'une des revendications précédentes, **caractérisé en ce que** la bague d'inversion (29) présente, sur son côté qui est à l'opposé de la deuxième chambre de travail (15), une partie en saillie (30) similaire à des dents de scie qui s'étend dans le sens axial et qui fait en plus saillie dans le sens radial vers l'intérieur.

5. Groupe piston-cylindre selon l'une des revendications précédentes, **caractérisé en ce que** la douille à cames (28) et la bague d'inversion (29) sont disposées en rotation solidaire l'une par rapport à l'autre, au moins un bossage (31) qui s'étend dans le sens radial vers l'intérieur dans la direction de l'axe longitudinal central (A) étant prévu sur le côté de la douille à cames (28) qui fait face à la deuxième chambre de travail (15), lequel fait saillie dans des creux (32) formés sur la bague d'inversion (29).

6. Groupe piston-cylindre selon l'une des revendications précédentes, **caractérisé en ce qu'**un palier (33) formé dans la douille à cames (28) sur le côté qui fait face à la bague d'inversion (29) et une surface d'appui (34) sur le côté frontal de la bague d'inversion (29) qui fait face à la douille à cames (28) réalisent un blocage contre un décalage axial de la bague d'inversion (29) plus profondément dans la chambre d'accueil (21).

7. Groupe piston-cylindre selon l'une des revendications précédentes, **caractérisé en ce que** sur l'extrémité libre du curseur de vanne (17) qui fait saillie dans la chambre d'accueil (21) est disposée une bague à cames (35) sur la surface d'enveloppe périphérique radiale de laquelle est formée au moins une, de préférence une pluralité de cames (36) de forme essentiellement triangulaire.

8. Groupe piston-cylindre selon l'une des revendications précédentes, **caractérisé en ce que** l'au moins une came (36) triangulaire se trouve dans l'espace libre (38) de la douille à cames (28) formé par deux cames (37) faisant saillie dans le sens radial vers l'intérieur, le nombre de cames (37) et celui d'espaces libres (38) étant identiques.

9. Groupe piston-cylindre selon l'une des revendications précédentes, **caractérisé en ce que** la douille à cames (28) et la bague d'inversion (29) sont disposées de manière à pouvoir tourner par rapport au curseur de vanne (17).
